Europäisches Patentamt

(19) European Patent Office

Office européen des brevets

(11) Numéro de publication: **0 118 358**
**A1**

## (12) DEMANDE DE BREVET EUROPEEN

(21) Numéro de dépôt: **84400397.0**

(22) Date de dépôt: **28.02.84**

(51) Int. Cl.³: **F 16 H 1/22**
**B 30 B 11/24**

(30) Priorité: **02.03.83 FR 8303443**

(43) Date de publication de la demande:
**12.09.84 Bulletin 84/37**

(84) Etats contractants désignés:
**AT BE CH DE GB IT LI LU NL SE**

(71) Demandeur: **USINES BEYER FRERES, Société dite :**
**37, rue de la Ménantille**
**F-88100 Saint-Die(FR)**

(72) Inventeur: **Poulin, Jean-Louis**
**"Les Noisetiers" Route de Dijon**
**F-88100 Saint-Die(FR)**

(74) Mandataire: **Chevallier, Robert Marie Georges**
**Cabinet BOETTCHER 23, rue La Boétie**
**F-75008 Paris(FR)**

(54) Réducteur pour l'entraînement des extrudeuses à deux vis.

(57) Réducteur pour l'entraînement des extrudeuses à deux vis.

Sur chacun des deux arbres (3,4) d'accouplement aux vis de l'extrudeuse est calé un premier pignon (5) à denture inclinée pour créer une composante axiale opposée à la réaction de poussée de la vis; chaque premier pignon (5) engrène avec deux premières roues dentées (6) diamétralement opposées qui sont en prise chacune avec un deuxième pignon (8) calé sur un arbre de butée (9) retenu axialment par une butée et portant une deuxième roue dentée (12A, 12B), ces roues (12A, 12B) ayant d'un arbre de butée (9) à l'autre des dentures inclinées en sens inverse et engrenant respectivement avec deux troisièmes pignons (13, 14) calés sur un arbre (15) qui porte une troisième roue dentée (16), les deux roues dentées (16) étant entraînées en rotation par un pignon final (17) d'un train réducteur.

Fig.3

EP 0 118 358 A1

# Réducteur pour l'entraînement des extrudeuses à deux vis.

L'invention a pour objet un réducteur de vitesse destiné à l'entraînement des arbres des vis dans les extrudeuses à deux vis.

Pour l'extrusion des matières plastiques et de nombreuses compositions plus ou moins complexes à base de polymères, on emploie couramment des extrudeuses à une seule vis alors qu'il est clairement reconnu que l'utilisation d'extrudeuses à deux vis est nettement plus avantageuse. En particulier, le débit d'une extrudeuse à deux vis est sensiblement proportionnel à la vitesse de rotation des vis alors que celui d'une extrudeuse à une seule vis atteint assez rapidement une valeur maximum après laquelle ce débit diminue. En outre, la puissance nécessaire à l'extrusion à l'aide d'une machine monovis est proportionnelle au carré de la masse de matière extrudée, tandis qu'elle a une valeur plus faible, pour un même débit, avec une machine à deux vis.

Les extrudeuses à deux vis ne se sont pas répandues, malgré leur supériorité de fonctionnement, par suite de difficultés que présente leur entraînement en rotation, dues à la faible distance qui sépare les axes des deux vis.

Le couple à transmettre est très important et la dimension des pignons qu'il est possible d'installer dans la place disponible ne permet qu'un seul engrènement. Il en résulte des efforts de flexion importants sur ces pignons limités en dimension et des réactions importantes sur les paliers supportant les arbres de ces pignons.

Il est impossible de loger dans ces paliers un unique roulement capable de supporter ces réactions. On place plusieurs roulements à aiguilles côte à côte en espérant que les réactions se répartiront également entre eux mais la déformation en flexion de l'arbre crée des sollicitations irrégulières, d'où des détériorations prématurées de roulements.

Les vis engendrent du fait de l'extrusion une forte poussée axiale qu'il faut équilibrer par des butées assez petites pour se monter dans l'espace qui peut leur être réservé, mais dimensionnées pour supporter la charge pendant la durée de service théorique de la machine.

La solution classique courante pour encaisser la réaction de la poussée axiale des vis consiste à monter une butée appropriée de grand diamètre à une extrémité d'une vis et à associer à la seconde vis plusieurs butées successives (jusqu'à quatre) de petit diamètre, dans l'intervalle disponible entre les deux vis. Ces butées successives comprennent des moyens flexibles dont on espère qu'ils assureront automatiquement une répartition convenable de la poussée entre les butées. La pratique montre que l'une d'entre elles reçoit une poussée exagérée et se détériore rapidement.

L'invention a pour but principal d'apporter un réducteur pour extrudeuse à deux vis avec lequel la puissance transmissible, donc le couple, est doublée, le risque de flexion est supprimé et la charge sur les paliers est réduite à zéro.

Il est nécessaire de rappeler ici qu'une contrainte supplémentaire intervient dans l'entraînement des extrudeuses à deux vis. Ces vis peuvent tourner dans le même sens ou dans des sens opposés ; il faut donc que tout réducteur destiné à une extrudeuse à deux vis puisse être facilement adapté à l'entraînement simultané de deux vis corotatives ou de deux vis contre-rotatives.

L'invention a encore pour but de parvenir à un réducteur susceptible d'être adapté facilement, à l'intérieur d'un unique carter, à des vis corotatives ou contre-rotatives.

On atteint les buts visés, selon l'invention, avec un réducteur dans lequel un premier et un second arbre d'accouplement aux vis sont espacés du même entraxe que celles-ci et sont pourvus chacun d'un premier pignon à denture hélicoïdale dont l'inclinaison est calculée pour produire à partir de la force d'entraînement une composante axiale opposée à la réaction de la poussée axiale de cette vis.

Ces premiers pignons sont déportés en sens axial l'un par rapport à l'autre sur les deux arbres d'accouplement.

A partir du premier arbre d'accouplement, chaque premier pignon est en prise en deux points diamétralement opposés avec deux premières roues dentées montées libres chacune en sens axial sur les arbres qui les supportent et prenant en charge chacune, la moitié de la puissance nécessaire à chacune des vis.

Chaque première roue dentée est nécessairement à denture inclinée et engrène avec un deuxième pignon à denture inclinée dans le même sens que la denture du premier pignon. Les deux deuxièmes pignons sont calés chacun sur un arbre de butée qui est retenu en sens axial, de préférence à chacune de ses deux extrémités opposées par une butée appropriée, nécessaire à la reprise des efforts axiaux engendrés par la denture hélicoïdale.

Sur chaque arbre de butée est calé aussi une deuxième roue dentée. Sur un de ces arbres de butée, cette deuxième roue dentée a une denture inclinée en sens opposé à la denture du deuxième pignon, porté par ce même arbre tandis que sur l'autre arbre de butée, la deuxième roue dentée a une denture inclinée comme celle du deuxième pignon qui lui correspond.

Chaque deuxième roue dentée est en prise avec un troisième pignon. Les deux troisièmes pignons sont fixés sur un même arbre ; ils ont nécessairement des dentures inclinées dans des sens opposés. A une extrémité de cet arbre est calée une troisième roue dentée qui a une denture droite.

Ce qui vient d'être décrit pour le premier arbre d'accouplement existe symétriquement pour le second arbre d'accouplement, de sorte qu'il existe deux troisièmes roues dentées.

Quand il s'agit de vis à sens de rotation opposés, les deux troisièmes roues dentées sont à diamètre relativement grand et elles engrènent ensemble. L'une d'entre elles est en prise avec un pignon final qui est l'aboutissement d'un train réducteur classique à arbres parallèles, entraîné par un moteur.

Quand il s'agit de vis à même sens de rotation, les deux troisièmes roues dentées sont à diamètre plus petit et elles engrènent chacune avec une même roue intermédiaire qui est en prise avec le pignon final du train réducteur classique.

Pour bien faire comprendre l'invention, on donnera maintenant, sans intention limitative et sans exclure aucune variante, une description d'un mode préféré de réalisation. On se reportera aux dessins annexés dans lesquels :

- la figure 1 est une vue en élévation d'un réducteur conforme à l'invention montant sur une face d'un carter les deux arbres d'accouplement à des vis d'une extrudeuse tournant en sens opposés,

- la figure 2 est une vue de dessus en coupe brisée mise à plat du réducteur de la figure 1,

- la figure 3 est une représentation schématique montrant à plus petite échelle la disposition réelle des engrenages à l'intérieur du carter de la figure 1,

- les figures 4 et 5 sont des vues analogues à celles des figures 1 et 3 relatives respectivement, à un réducteur en élévation et à une représentation schématique des engrenages quand les vis tournent dans le même sens.

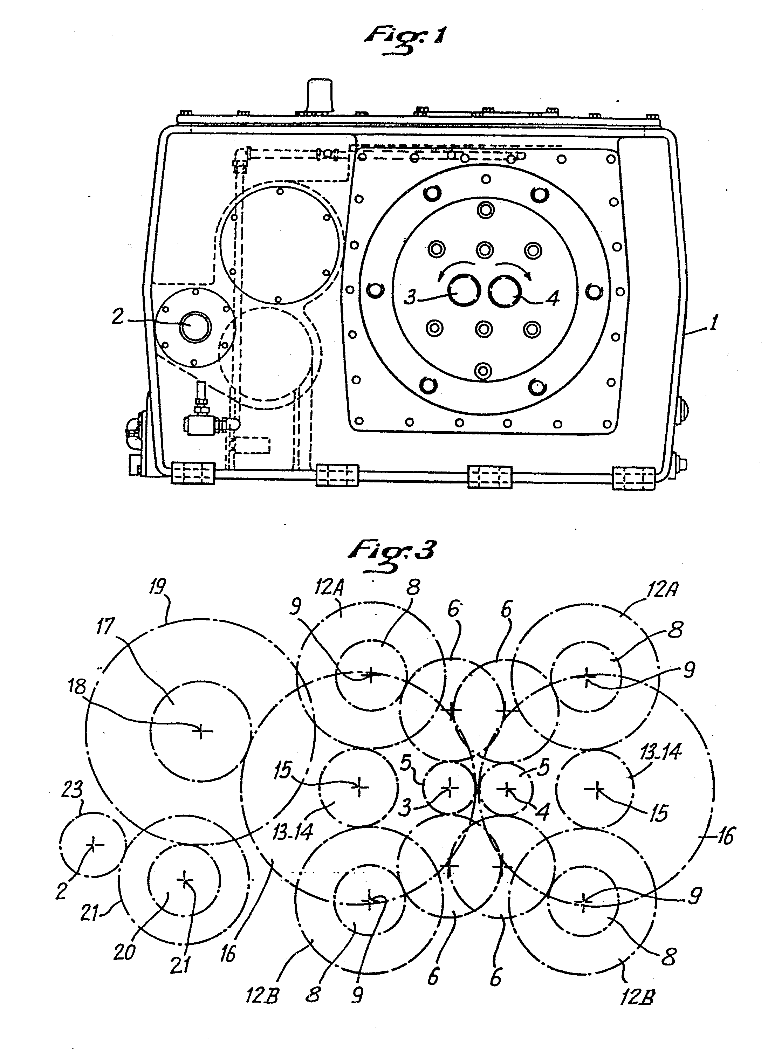

Un carter 1, visible sur la figure 1, contient les engrenages que l'on décrira plus loin qui sont disposés pour assurer la transmission du couple fourni par un moteur à un arbre d'entrée 2 jusqu'à deux arbres de sortie qui constituent un premier arbre 3 et un second arbre 4 d'accouplement aux vis d'une extrudeuse à deux vis (non représentées).

Le premier arbre 3 et le second arbre 4 d'accouplement sont pourvus chacun respectivement d'un premier pignon 5 ; ces deux pignons 5 sont déportés en sens axial. A partir du premier pignon 5 de chaque arbre d'accouplement 3, 4, il existe symétriquement une succession de pignons et de roues dentées identiques que l'on décrira une seule fois.

Chaque premier pignon 5 a une denture inclinée pour donner naissance , à partir de la force d'entraînement, à une composante axiale dirigée en sens opposé à la réaction de la poussée axiale de la vis à laquelle est accouplé l'arbre correspondant 3,4.

Avec cette disposition, une réaction de poussée axiale de 150 kN produite par une vis est contrebalancée par une composante axiale de la force motrice de l'ordre de 100 kN, de sorte qu'il ne reste plus à encaisser qu'une force axiale résiduelle de 50 kN.

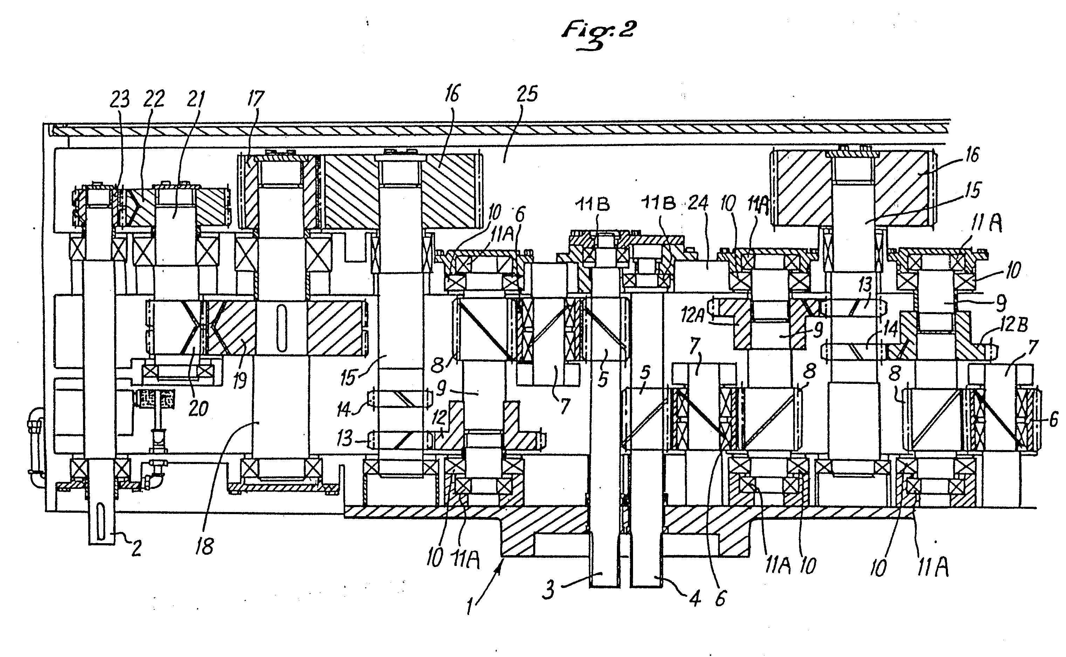

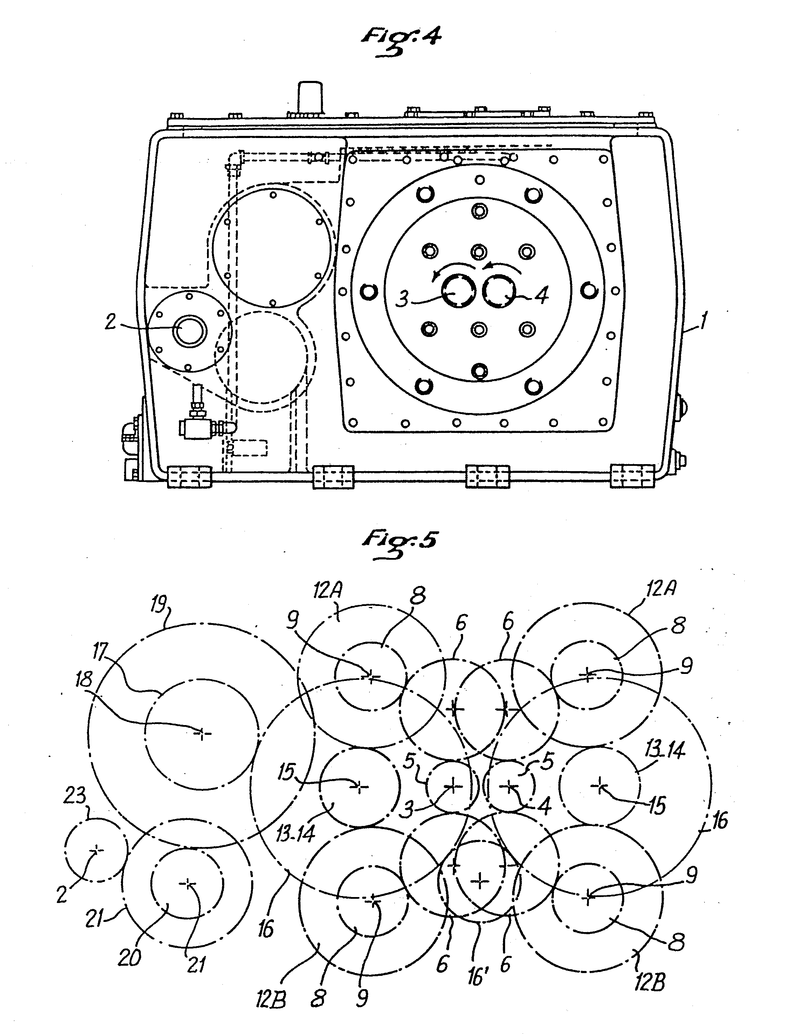

Chaque premier pignon 5 est en prise en deux points diamétralement opposés, comme on le voit sur la figure 3, avec deux premières roues dentées 6. Les quatre roues dentées 6 qui existent au total ne se gênent pas puisque les premiers pignons 5 sont déportés en sens axial comme le montre la figure 2 où, en revanche, leur disposition opposée deux à deux en sens diamétral par rapport à chaque pignon 5 n'apparaît pas. Sur la figure 2, la deuxième roue dentée 6 associée au premier pignon 5 du premier arbre d'accouplement 3 n'a pas été représentée pour la clarté du dessin.

Chaque première roue dentée 6 reçoit la force axiale résiduelle que lui transmet le premier pignon 5, mais comme chacune de ces premières roues dentées 6 est montée libre en sens axial à l'aide d'un arbre intermédiaire 7, elle transmet à son tour cette force axiale à un deuxième pignon 8 avec lequel elle est en prise. Chaque deuxième pignon 8 a une denture inclinée dans le même sens que la denture de chaque premier pignon 5 et il est calé sur un arbre de butée 9. Il existe donc en tout quatre arbres de butée 9 qui sont supportés chacun par deux roulements à bille 10 et qui sont retenus en sens axial par deux butées 11A à billes ou à rouleaux. Théoriquement, la direction de la force axiale transmise à chaque arbre de butée 9 est connue et une seule butée pourrait suffire

Le choix de l'inclinaison des dentures des pignons 5, des roues dentées 6 et des pignons 8 permet de fixer en fonction du couple d'entraînement, la répartition de la charge axiale entre les arbres 3, 4 d'accouplement des vis et les arbres 9. Une forte inclinaison des dentures reporte la charge en totalité ou presque sur les arbres 9. Une inclinaison plus modérée laisse une fraction de la charge sur les arbres d'accouplement 3, 4 et reporte le reste sur les arbres 9. La possibilité que donne ainsi l'invention de répartir la charge permet de choisir selon la place disponible des butées 11A pour les arbres 9, et des butées 11B pour les arbres d'accouplement 3, 4, qui sont capables de supporter les charges axiales auxquelles elles sont soumises pendant toute la durée de fonctionnement désirée. La répartition de la charge se fait dynamiquement pendant la marche et conserve sa valeur. En pratique, en raison des jeux de fonctionnement et des imperfections de réalisation, ainsi que des fluctuations des résistances rencontrées par les vis, les arbres de butée 9 peuvent subir de faibles mouvements axiaux, de sorte qu'il est préférable de prévoir des butées 11A à leurs deux extrémités. Un des avantages de l'invention est qu'elle autorise l'emploi de butées disponibles dans le commerce. Sur chaque arbre de butée 9 est calée aussi une deuxième roue dentée 12A, 12B, à denture inclinée. Sur un arbre de butée 9, cette deuxième roue dentée 12A a une denture inclinée en sens inverse de la denture du deuxième pignon 8 tandis que sur l'autre arbre de butée 9 la deuxième roue dentée 12B a une denture inclinée comme celle du second pignon 8 qui lui correspond.

Les deux roues dentées 12 engrènent chacune respectivement avec un troisième pignon 13-14 et les deux troisièmes pignons 13-14 fixés sur un même arbre 15. Ils ont nécessairement des dentures inclinées en sens inverses. Par conséquent, les forces axiales transmises à chaque arbre 15 par les deux pignons 13-14 qu'il porte s'annulent. Chacun des arbres 15 peut être monté flottant en sens axial de façon qu'il occupe toujours une position d'équilibre résultant de l'égalité des forces axiales qu'il subit. L'équilibrage de ces charges axiales assure une juste répartition de la puissance à transmettre entre les deux deuxièmes roues, donc entre les deux deuxièmes pignons et deux premières roues. On est ainsi assuré, malgré les tolérances et les défauts éventuels d'usinage :

- que la puissance nécessaire à chacune des vis est bien répartie sur les deux engrènements de chaque premier pignon,
- qu'ainsi les efforts tangentiels et radiaux des engrènements s'annulent parfaitement du fait de la position diamétralement opposée des deux premières roues, supprimant ainsi les flexions et les réactions sur les paliers. Les roulements installés sur ces paliers n'ont plus qu'une fonction de guidage, n'étant soumis à aucun effort. Cette égalité se traduit par une égalité des efforts tangentiels sur la denture et donc une exacte répartition des puissances (ou des couples) dans les engrenages 12A - 12B - 9 et 6.

L'égalité des couples sur les roues 6 se traduit par des efforts tangentiels et radiaux égaux et opposés du fait de la position des roues 6 diamétralement opposées par rapport aux pignons 5. Ces efforts s'annulant les roulements supportant les arbres 3 et 4 sur lesquels sont montés les pignons 5, ne supportent aucun effort de flexion et ne font plus office que de guidage des arbres, leur dimension s'en trouve réduite et ils entrent ainsi dans la place limitée disponible.

Chaque arbre 15 s'étend à l'intérieur du carter 1 au-delà des arbres 3, 4 et 9 et il porte une troisième roue dentée 16 qui a une denture droite.

Quand il s'agit de vis et par conséquent d'arbres d'accouplement 3, 4 qui tournent en sens opposés, les deux troisièmes roues dentées 16, associées chacune respectivement à l'un de ces arbres 3, 4, engrènent ensemble et l'une d'entre elles est en prise avec un pignon 17 porté par un arbre 18.
Ce dernier porte une roue dentée 19 qui engrène avec un
pignon 20 calé sur un arbre intermédiaire 21 ; ce dernier
porte encore une roue dentée 22 qui est en prise avec un
pignon 23 calé sur l'arbre d'entrée 2. Les pignons 17, 20,
23, les roues dentées 19, 22 et les arbres parallèles 2, 21,
18 constituent un train réducteur classique qui sert à réduire
la vitesse du moteur accouplé à l'arbre d'entrée 2 à la
valeur nécessaire à l'entraînement convenable des troisièmes
roues dentées 16.

Quand il s'agit de vis qui tournent dans le même
sens, on utilise deux troisièmes roues dentées 16 de diamètre
plus petit (figures 4 et 5) et on les fait engrener toutes
deux avec une même roue dentée intermédiaire 16' qui se
loge sans difficulté dans le carter 1. Une seule roue dentée
16 est en prise avec le pignon 17 qui est le pignon final
du train réducteur décrit ci-dessus. D'autres moyens équivalents entre la partie réduction et la partie transmission
aux vis d'extrusion pourraient être adoptés.

Il ressort de ce qui précède que, dans un réducteur conforme à l'invention, les arbres d'accouplement des
vis ne subissent pas de flexion; les roulements qui les
supportent ne sont pas chargés puisque leur entraînement a
lieu  en deux points diamétralement opposés et la puissance
à transmettre est parfaitement répartie entre ces deux points.
De plus, les efforts de poussée sont reportés sur des arbres
de butée à une valeur réduite et sur des arbres suffisamment
espacés pour que chacun d'eux puisse être pourvu d'une butée
unique capable d'encaisser la totalité de la poussée.

On remarquera que, dans un réducteur conçu conformément à l'invention, sauf les arbres 7 qui sont très courts,
tous les arbres sont supportés par une première paroi du
carter 1 et par une cloison intérieure 24. Celle-ci ménage
avec la seconde paroi opposée du carter un intervalle 25. Les
deux troisièmes roues dentées 16 et le pignon final 17 du train réducteur se trouvent dans cet intervalle 25 qui offre toute la place nécessaire à l'adaptation du réducteur aux sens de rotation, identiques ou opposés, des vis d'une extrudeuse, comme on l'a expliqué plus haut. Cette disposition permet aussi, par décalage et positionnement angulaire convenable de l'une des roues 16, de régler facilement le positionnement angulaire relatif des arbres des vis 3 et 4.

REVENDICATIONS

1. Réducteur ayant un carter (1) pour l'entraînement en rotation à partir d'un arbre d'entrée (2) des vis d'une extrudeuse à deux vis au moyen de deux arbres de sortie d'accouplement (3, 4) supportés par le carter (1) dans le prolongement desdites vis, chacun de ces arbres d'accouplement (3, 4) étant pourvu d'un premier pignon (5) et les deux pignons (5) étant déportés en sens axial, caractérisé en ce que sur un arbre d'accouplement (3) le premier pignon (5) a une denture inclinée donnant naissance à une composante axiale dirigée en sens opposé à la réaction de la poussée de la vis correspondante, ce premier pignon (5) engrène en deux points diamétralement opposés avec deux premières roues dentées (6) à denture inclinée montées chacune sur un arbre (7), chacune des premières roues dentées (6) est en prise avec un deuxième pignon (8) à denture inclinée, chacun des deuxièmes pignons (8) est calé sur un arbre de butée (9) retenu en sens axial au moins à une de ses extrémités par une butée (11A), sur chacun des arbres de butée (9) est calée une deuxième roue dentée à denture inclinée, la deuxième roue dentée (12A) d'un arbre de butée (9) ayant une denture inclinée en sens opposé à la denture inclinée du deuxième pignon (8) de ce même arbre de butée (9), la deuxième roue dentée (12B) de l'autre arbre de butée (9) ayant une denture inclinée dans le même sens que la denture inclinée du deuxième pignon (8) de cet autre arbre de butée (9), les deux deuxièmes roues dentées (12A, 12B) engrènent chacune respectivement avec un troisième pignon correspondant (13, 14), ces troisièmes pignons (13, 14) ayant des dentures inclinées en sens opposés et étant fixés à un même arbre (15) sur lequel est calée aussi une troisième roue dentée (16) qui reçoit un couple moteur en provenance de l'arbre moteur (2).

2. Réducteur ayant un carter (1) pour l'entraînement en rotation à partir d'un arbre d'entrée (2) des vis d'une extrudeuse à deux vis au moyen de deux arbres de sortie d'accouplement (3, 4) supportés par le carter (1) dans le prolongement desdites vis, chacun de ces arbres d'accouplement (3, 4) étant pourvu d'un premier pignon (5) et les deux pignons (5) étant déportés en sens axial, caractérisé en ce que sur chacun des arbres d'accouplement (3, 4) le premier pignon (5) a une denture inclinée donnant naissance à une composante axiale dirigée en sens opposé à la réaction de la poussée de la vis correspondante, chaque premier pignon (5) engrène en deux points diamétralement opposés avec deux premières roues dentées (6) à denture inclinée montées chacune sur un arbre (7), chacune des premières roues dentées (6) est en prise avec un deuxième pignon (8) à denture inclinée, chacun des deuxièmes pignons (8) est calé sur un arbre de butée (9) retenu en sens axial au moins à une de ses extrémités par une butée (11A), sur chacun des arbres de butée (9) est calée une deuxième roue dentée à denture inclinée, la deuxième roue dentée (12A) d'un arbre de butée (9) ayant une denture inclinée en sens opposé à la denture inclinée du deuxième pignon (8) de ce même arbre de butée (9), la deuxième roue dentée (12B) de l'autre arbre de butée (9) ayant une denture inclinée dans le même sens que la denture inclinée du deuxième pignon (8) de cet autre arbre de butée (9), les deux deuxièmes roues dentées (12A, 12B) engrènent chacune respectivement avec un troisième pignon correspondant (13, 14), ces troisièmes pignons (13, 14) ayant des dentures inclinées en sens opposés et étant fixés à un même arbre (15) sur lequel est calée aussi une troisième roue dentée (16), les deux troisièmes roues dentées (16) du réducteur associées respectivement aux arbres d'accouplement (3,4) recevant le couple moteur en provenance de l'arbre moteur (2).

3. Réducteur selon la revendication 1 caractérisé en ce que le même arbre d'accouplement (3) est monté avec une butée extrême (11B) choisie en fonction de la place disponible et l'inclinaison de la denture des pignons (5, 8, 13, 14) et des roues dentées (6, 12A, 12B) est déterminée pour répartir la charge axiale totale entre cette butée (11B) et les butées (11A) des arbres de butée (9).

4. Réducteur selon la revendication 2 caractérisé en ce que les arbres d'accouplement (3, 4) sont montés chacun avec une butée extrême (11B) choisie en fonction de la place disponible et l'inclinaison de la denture des pignons (5, 8, 13, 14) et des roues dentées (6, 12A, 12B) est déterminée pour répartir la charge axiale totale entre cette butée (11B) et les butées (11A) des arbres de butée (9).

5. Réducteur selon la revendication 2 caractérisé en ce que les deux troisièmes roues dentées (16) engrènent ensemble et l'une d'elles est en prise avec un pignon final (17) d'un train réducteur (23, 22, 20, 19, 17) disposé à partir de l'arbre d'entrée (2), quand l'extrudeuse est du type à vis tournant en sens opposés.

6. Réducteur selon la revendication 2 caractérisé en ce que les deux troisièmes roues dentées (16) engrènent avec une même roue dentée supplémentaire et l'une d'entre elles est en prise avec un pignon final (17) d'un train réducteur (23, 22, 20, 19, 17) disposé à partir de l'arbre d'entrée (2), quand l'extrudeuse est du type à vis tournant dans le même sens.

7. Réducteur selon la revendication 2 caractérisé en ce que les arbres d'accouplement (3, 4), les arbres de butée (9) et les arbres (15) des troisièmes pignons (13, 14) et des troisièmes roues dentées (16) sont supportés par une première paroi du carter (1) et par une cloison intérieure (24) qui ménage avec la seconde paroi opposée du carter (1) un intervalle (25) dans lequel se trouvent les troisièmes roues dentées (16).

8. Réducteur selon la revendication 2 caractérisé en ce que chaque arbre de butée (9) est retenu à chacune de ses extrémités opposées par une butée (11A).

0118358

1/3

*Fig. 1*

*Fig. 3*

Fig.2

*Fig.4*

*Fig.5*

Office européen
des brevets

**RAPPORT DE RECHERCHE EUROPEENNE**

**0118358**
Numéro de la demande

EP  84 40 0397

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | DE-A-3 119 305  (FALK CORP.)<br>* Page 9, lignes 1-4, 26-31; figures * | 1,3 | F 16 H    1/22<br>B 30 B   11/24 |
| A | DE-A-2 025 162  (AUGER-PLASTIC)<br>* Page  4,  lignes 8-13; figures 1,3 * | 1,3 | |
| A | US-A-3 124 061  (H. STèDLI)<br>* Colonne  2, lignes 32-53; figures * | 1,3 | |
| A | FR-A-2 437 532  (WEINER & PFLEIDERER) | | |

DOMAINES TECHNIQUES
RECHERCHES (Int. Cl. ³)

F 16 H
B 30 B
B 29 F

Le présent rapport de recherche a été établi pour toutes les revendications

| Lieu de la recherche<br>LA HAYE | Date d'achèvement de la recherche<br>26-04-1984 | Examinateur<br>MENDE H. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

OEB Form 1503. 03.82